# EUROPÄISCHE PATENTANMELDUNG

(11) **EP 1 148 365 A2**
(43) Veröffentlichungstag der Anmeldung: **24.10.2001**
(21) Anmeldenummer: 01107331.9
(22) Anmeldetag: 24.03.2001
(51) Int. Cl.: G02B 6/38

(54) **Anordnung mehrerer Ferrulen für Lichtwellenleiter und Verfahren zum Herstellen eines Kunststoff-Ferrulen aufweisenden Bandes**

(30) Priorität: 19.04.2000 DE 10019392
(71) Anmelder: Bayerische Motoren Werke Aktiengesellschaft, 80809 München (DE); Tyco Electronics AMP GmbH, 64625 Bensheim (DE)
(72) Erfinder: Weigert, Patrick, 85375 Neufahrn (DE); Schuhbäck, Andreas, 80993 München (DE); Bauer, Jürgen, 85049 Ingolstadt (DE)

(57) **Zusammenfassung**

Die Erfindung betrifft eine Anordnung mehrerer Ferrulen für Lichtwellenleiter mit mindestens einem Verbindungsabschnitt, wobei jeweils zwei Ferrulen über einen Verbindungsabschnitt miteinander verbunden sind oder über ein Band (1) miteinander verbunden sind. In einer vorteilhaften Ausführung sind die Ferrulen mit dem Band einstückig verbunden. In einem erfindungsgemäßen Verfahren zum Herstellen eines Kunststoff-Ferrulen aufweisenden Bandes werden folgende Verfahrensschritte ausgeführt: Spritzen einer ersten Kunststoff-Ferrule (2), Weitertransport der fertigen Kunststoff-Ferrule um eine definierte Wegstrecke und Spritzen einer zweiten Kunststoff-Ferrule (2), so daß sie mit der ersten Kunststoff-Ferrule verbunden ist.

Das Verfahren kann derart weitergebildet werden, daß mit den Kunststoff-Ferrulen (2) Bandsegmente (4) gespritzt werden.

## Beschreibung

Anordnung mehrerer Ferrulen für Lichtwellenleiter und Verfahren zum Herstellen eines Kunststoff-Ferrulen aufweisenden Bandes

Die Erfindung betrifft eine Anordnung mehrerer Ferrulen für Lichtwellenleiter sowie ein Verfahren zum Herstellen eines Kunststoff-Ferrulen aufweisenden Bandes.

Bei allen zur Datenübertragung eingesetzten Lichtwellenleitern ergibt sich das Problem, daß das Ende der Faser sehr präzise positioniert werden muß. Sowohl die radialen als auch die axialen Positionstoleranzen sind dabei entscheidend für eine Begrenzung der Koppelverluste. Bei nahezu allen bekannten technischen Lösungen wird dabei ein kleines rohrförmiges Teil über das Faserende geschoben und dort befestigt. Dieses Teil wird auch Ferrule, Insert oder optischer Kontakt genannt. Sowohl bei Lichtwellenleitern aus Glas als auch bei solchen aus Kunststoff ergibt sich dabei das Problem, eine rationelle und dabei den hohen technischen Anforderungen entsprechende Befestigungsmethode zu finden. Aus diesem Grund ist ein sehr sicherer und automatisierbarer Massenprozeß erforderlich. Oft müssen die Ferrulen jedoch einzeln und orientiert in den Montageprozeß eingeführt werden. Bei Anlieferung als Schüttgut muß deshalb vor jeder Montagestation ein bauteilspezifischer Vibrationsförderer und eine bauteilspezifische Schwingschiene angebracht werden. Auch andere vergleichbare Vereinzelungs- und Zuführeinrichtungen sind bekannt. Die Investitionskosten für diese Einrichtungen sind erheblich.

Aufgabe der Erfindung ist es daher, eine Anordnung vorzuschlagen, so daß die Ferrulen einer Montagemaschine zugeführt werden können, ohne daß aufwendige Vereinzelungs- und Zuführeinrichtungen notwendig sind.

Diese Aufgabe wird gelöst durch eine Anordnung mehrere Ferrulen für Lichtwellenleiter mit mindestens einem Verbindungsabschnitt, wobei durch den mindestens einen Verbindungsabschnitt mindestens zwei Ferrulen miteinander verbunden sind.

Weiterhin wird die Aufgabe gelöst durch eine Anordnung mehrerer Ferrulen für Lichtwellenleiter, wobei die Ferrulen auf einem fortlaufenden Band angeordnet und auf diesem fixiert sind.

Durch die Verbindung von Ferrulen zu einem Band ist eine einfache Möglichkeit gegeben, einer Montagemaschine die Ferrulen zuzuführen. Je nach Ausführung der Anordnung ist nur die Position der Ferrulen auf bzw. in dem Band festgelegt, wobei die Ferrulen mit einem Spiel gehalten sein können, oder aber es ist auch eine Verdrehung der Ferrulen verhindert.

Bei Einsatz von Kunststoffmaterial für die Ferrulen bzw. das Band besteht ein Verfahren zum Herstellen eines Kunststoff-Ferrulen aufweisenden Bandes aus den Verfahrensschritten:
- Spritzen einer ersten Kunststoff-Ferrule,
- Weitertransport der fertigen Kunststoff-Ferrule um eine definierte Wegstrecke, und
- Spritzen einer zweiten Kunststoff-Ferrule, so daß sie mit der ersten Kunststoff-Ferrule verbunden ist.

Das Verfahren ist vorteilhaft, weil im selben Herstellungsschritt sowohl die Kunststoff-Ferrule als auch das Band hergestellt werden können. Da kein zusätzlicher Fertigungsschritt notwendig ist, führt das erfindungsgemäße Verfahren zu einer erheblichen Kostenersparnis.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. Es zeigt:
- Figur 1: zwei einstückig mit einem Band verbundene KunststoffFerrulen,
- Figur 2: zwei Bandsegmente des Bandes von Figur 1,
- Figur 3: die Anformgeometrie eines Bandsegmentes von Figur 2,
- Figur 4: die Anordnung von Figur 1 in einer Draufsicht,
- Figur 5: die Anordnung von Figur 1 mit einer Vielzahl von Ferrulen,
- Figur 6: einen Querschnitt der Anordnung von Figur 1 und
- Figur 7: ein weiteres Ausführungsbeispieles einer Anordnung mit Ferrulen und einem Band.

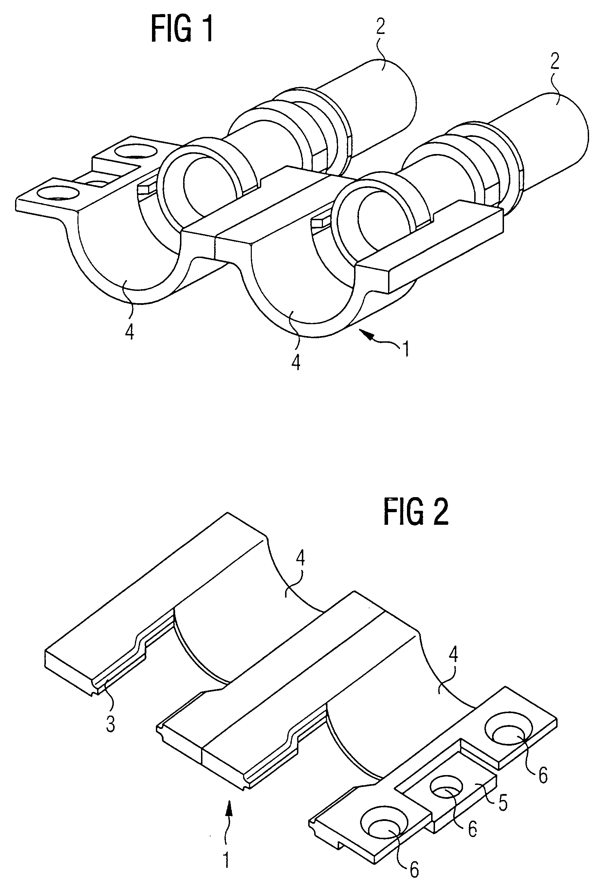

In Figur 1 sind zwei Bandsegmente 4 eines Bandes 1 mit daran angeformten Ferrulen 2 dargestellt. Die Ferrulen 2 sind einstückig mit Bandsegmenten 1 verbunden, können aber relativ einfach aus dem Band getrennt werden, da an den Verbindungsstellen zwischen den Ferrulen 2 und dem Band 1 Querschnittsverringerungen vorgesehen sind. Die Bandsegmente 4 sind U-förmig gestaltet. Diese Gestaltung erschließt Vorteile im Herstellungsprozeß. Die Ferrulen 2 werden beim Spritzvorgang um einen Formkern herum gespritzt, der nach der Verfestigung des Kunststoffmaterials wieder herausgezogen wird. Ein ebenes Band würde den Kernzug behindern.

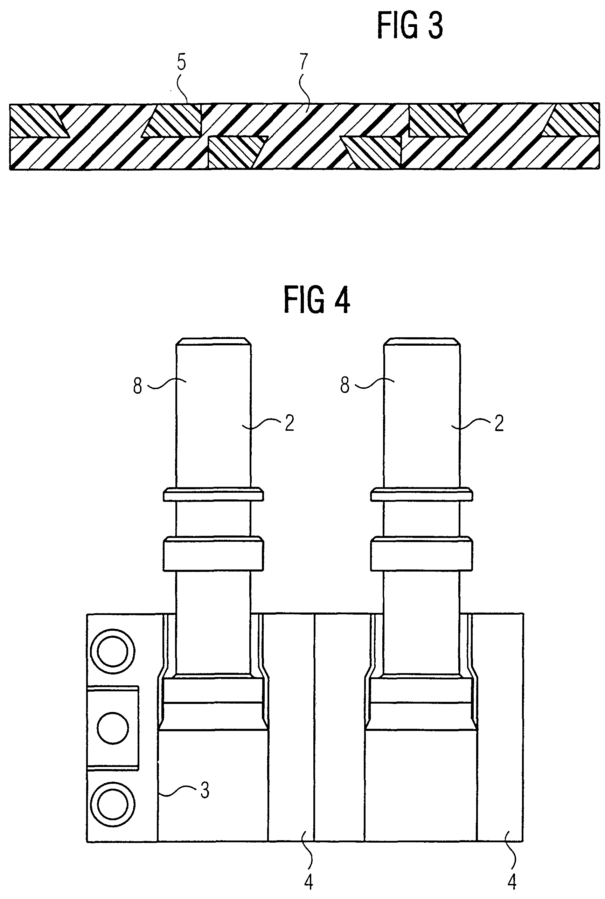

In der Figur 2 sind die Bandsegmente 4 ohne die Ferrulen 2 dargestellt. In dieser Darstellung ist zu erkennen, daß die Verbindungsabschnitte 3 einen wesentlich geringeren Querschnitt aufweisen als die benachbarten Abschnitte. Das Heraustrennen ist somit sehr einfach. Da das Band 1 durch die U-förmigen Abschnitte jedoch durchgehend ist, ist das sichere Halten des Bandes gewährleistet. Anformabschnitte 5 der Bandsegmente 4, die zum Anspritzen eines weiteren Bandsegmentes 4 vorgesehen sind, weisen eine sogenannte Hinterschnittgeometrie auf. Beim Anspritzen eines neuen Bandsegmentes 4 an ein bestehendes entsteht eine kalte Spritznaht, die eine potentielle Rißstelle darstellt. Die Bohrungen 6 in dem Anförmabschnitt 5 werden beim Anspritzen von Kunststoffmaterial durchsetzt, so daß sich eine "Verrastung" zwischen dem alten Bandsegment und dem neu angespritztem Bandsegment ergibt. Der Anformabschnitt 5 im Ausführungsbeispiel von Figur 2 ist dreiteilig ausgebildet, wobei der mittlere Teil gegenüber den beiden angrenzenden Teilen versetzt ist. Dies ist nochmals in Figur 3 gut zu erkennen. In diesem Querschnitt ist neben dem Anformabschnitt 5 auch Kunststoffspritzmasse 7 das neu angespritzte Bandsegment zu erkennen. Die Spritzmasse 7 des neuen Bandsegmentes erstreckt sich durch die Bohrungen des Anformabschnittes 5. Die Bohrungen sind jeweils konisch, so daß sich ein sicherer Halt zwischen dem Anformabschnitt 5 und dem neuen Bandsegment ergibt, und sich die beiden Teile weder nach oben noch nach unten voneinander lösen können. Die sichere und stabile Verbindung zwischen zwei Bandsegmenten 4 ist wichtig, da Bänder üblicherweise auf Rollen aufgewickelt werden. Das bedeutet, daß das Band auf Biegung beansprucht wird und somit einer besonderen Belastung ausgesetzt ist.

Die Lage der Ferrulen 4 in den Bandsegmenten 4 geht nochmals aus der Figur 4 hervor. Die Verbindung der Ferrulen 2 mit den Bandsegmenten 4 liegt an den Verbindungsabschnitten 3. Ein steckerseitiges Ende 8 der Ferrulen 2 bleibt somit frei von einem Grat, so daß eine Nachbearbeitung nicht notwendig ist.

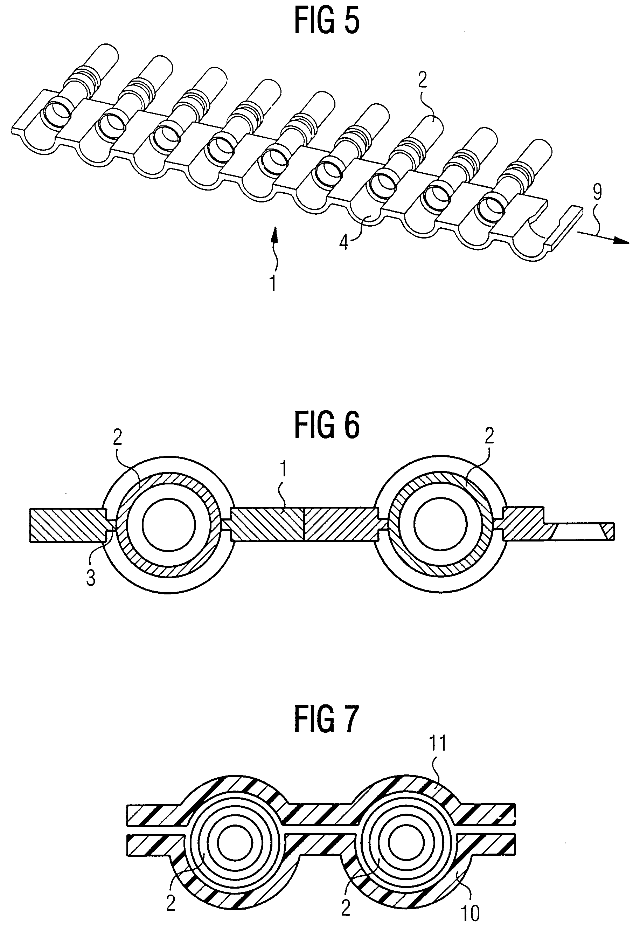

Die Figur 5 zeigt, wie eine Vielzahl von Bandsegmenten 4 mit Ferrulen 2 ein Band 1 bildet. Bei Zuführung in eine Maschine wird das Band 1 in Richtung des Pfeiles 9 bewegt. Aus dem ersten Bandsegment ist bereits die Ferrule entfernt. Das Entfernen der Ferrulen aus dem Band 1 kann durch die Montagemaschine geschehen. Dabei können die Haltewerkzeuge zum Halten während der Konfektionierung mit einem Lichtwellenleiter gleichzeitig als Werkzeug zum Lösen der Ferrulen aus dem Band dienen.

Die Figur 6 zeigt einen Längsschnitt durch das Band mit noch darin befindlichen Ferrulen 2. Gut zu erkennen sind die dünnen Verbindungsstege 3. Ebenso deutlich ist, wie die beiden dargestellten Bandsegmente ineinander übergehen.

In einer vereinfachten Ausführung ist es möglich, daß die Ferrulen direkt miteinander in Verbindung stehen. Die Ferrulen sind dann nicht mehr einstückig mit dem Band verbunden, sondern besitzen einen Verbindungsabschnitt, der die Ferrulen untereinander verbindet. Das Problem bei dieser vereinfachten Anordnung ist die Stabilität des gesamten Bandes. Weiterhin ist es denkbar, daß die Ferrulen nicht mit dem Band einstükkig verbunden sind, sondern durch Klemmen auf diesem angeordnet sind. Die Klemmung kann spielfrei geschehen oder aber so, daß sich die Ferrulen beispielsweise noch drehen können. Das Klemmen kann gemäß Figur 7 realisiert werden, wo das Band aus einem Unterband 10 und einem Oberband 11 besteht. Die Ferrulen 2 sind zwischen den beiden Bändern 10 und 11 aufgenommen und gehalten. Das Entnehmen aus dem Band geschieht in diesem Fall durch Spreitzen der beiden Bänder oder durch das Herausschieben auf einer Bandseite.

## Patentansprüche

1. Anordnung mehrerer Ferrulen für Lichtwellenleiter mit mindestens einem Verbindungsabschnitt (3),
wobei durch den mindestens einen Verbindungsabschnitt (3) mindestens zwei Ferrulen (2) miteinander verbunden sind.

2. Anordnung nach Anspruch 1,
**dadurch gekennzeichnet,**
**daß** eine Vielzahl miteinander verbundener Ferrulen (2) ein Band (1) bilden.

3. Anordnung nach Anspruch 1,
**dadurch gekennzeichnet,**
**daß** die Verbindungsabschnitte (3) flexibel sind.

4. Anordnung nach Anspruch 1,
**dadurch gekennzeichnet,**
**daß** der mindestens eine Verbindungsabschnitt (3) einen Abschnitt mit verringertem Querschnitt aufweist.

5. Anordnung mehrerer Ferrulen für Lichtwellenleiter
mit einem fortlaufenden Band (1), wobei die Ferrulen (2) auf dem Band (1) angeordnet und fixiert sind.

6. Anordnung nach Anspruch 5,
**dadurch gekennzeichnet,**
**daß** das fortlaufende Band (1) ein Kunststoffspritzteil ist.

7. Anordnung nach Anspruch 6,
**dadurch gekennzeichnet,**
**daß** ein Bandsegment (4) zum Anspritzen eines weiteren Bandsegmentes (4) eine Geometrie aufweist, durch die die zwei Bandsegmente (4) verrastet sind.

8. Anordnung nach Anspruch 5,
**dadurch gekennzeichnet,**
**daß** die Kunststoff-Ferrulen (2) mit dem Band (1) einstükkig verbunden sind.

9. Anordnung nach Anspruch 8,
**dadurch gekennzeichnet,**
**daß** die Ferrulen (2) und das Band (1) an einem Endbereich der Ferrule miteinander verbunden sind.

10. Anordnung nach Anspruch 5,
**dadurch gekennzeichnet,**
**daß** das Band (1) durch miteinander verbundene U-förmige Brückensegmente gebildet ist.

11. Anordnung nach Anspruch 5,
**dadurch gekennzeichnet,**
**daß** das Band (1) aus einem Ober- und einem Unterband (10, 11) besteht, zwischen denen die Kunststoff-Ferrulen (2) aufgenommen sind.

12. Anordnung nach Anspruch 5,
**dadurch gekennzeichnet,**
**daß** die Kunststoff-Ferrulen (2) derart auf dem Band (1) fixiert sind, daß sie um ihre Längsachse drehbar sind.

13. Verfahren zum Herstellen eines Kunststoff-Ferrulen (2) aufweisenden Bandes (1) mit folgenden Verfahrensschritten:
- Spritzen einer ersten Kunststoff-Ferrule (2),
- Weitertransport der fertigen Kunststoff-Ferrule (2) um eine definierte Wegstrecke und
- Spritzen einer zweiten Kunststoff-Ferrule (2), so daß sie mit der ersten Kunststoff-Ferrule verbunden ist.

14. Verfahren nach Anspruch 13,
**dadurch gekennzeichnet,**
**daß** mit den Kunststoff-Ferrulen ein Bandsegment (4) gespritzt wird, wobei die Verbindung der Ferrulen (2) über die Bandsegmente (4) erfolgt.
